comparison means outputs an interrupt signal to control means said interrupt signal indicating the presence of a fault.

9. A clock signal security arrangement according to claim 8 wherein said comparison means also outputs a data signal indicating which of the input signals is detected as having a fault.

Europäisches Patentamt

European Patent Office

Office européen des brevets

(19)

(11) Publication number: **0 211 674**
**A2**

# EUROPEAN PATENT APPLICATION

(21) Application number: 86306167.7

(22) Date of filing: 08.08.86

(51) Int. Cl.⁴: **H04L 7/00**

(30) Priority: 09.08.85 GB 8520035

(43) Date of publication of application:
25.02.87 Bulletin 87/09

(84) Designated Contracting States:
BE CH DE FR IT LI NL SE

(71) Applicant: **PLESSEY OVERSEAS LIMITED**
**Vicarage Lane**
**Ilford Essex IGI 4AQ(GB)**

(72) Inventor: **Melinn, Francis**
**24 Millview Lawns**
**Malahide Co. Dublin(IE)**
Inventor: **Greenland, Roger**
**48 Blackamoore Lane**
**Maidenhead Berkshire(GB)**

(74) Representative: **Sorenti, Gino**
**Intellectual Property Department The**
**Plessey Company plc 2-60 Vicarage Lane**
**Ilford Essex IG1 4AQ(GB)**

(54) **Clock signal selection and security arrangements.**

(57) In a clock signal security arrangement three levels of master clock input signals and three levels of frame synchronisation signals are received. A respective average clock for each of the master clock and frame synchronisation is derived and is used to check the validity of the three input levels. Dependant upon the validity determination either the first or the second input clock signal is output as the master clock signal. the respective average clock is output as the frame synchronisation signal. Faults detected in either of the clock sets result in an interrupt alarm signal being forwarded to a control computer of a connected telecommunications exchange together with a data word identifying the faulty input signal.

## CLOCK SIGNAL SELECTION AND SECURITY ARRANGEMENTS

The present invention relates to clock signal selection and security arrangements and more particularly but not exclusively to such arrangements for use in a time-division-multiplexed pulse-code-modulated digital signal switching system.

In our co-pending Patent Application No........ line terminating apparatus for use in a digital switching system (such as the system known in the United Kingdom as System X) is described.

In such complex switching systems faults in for example time-division multiplex frame synchronisation or other clock functions may cause a communications failure. Accordingly monitoring clock signals in peripheral units and responding rapidly to fault conditions encountered thereon are important functions.

It is one object of the present invention to provide a clock signal selection and security arrangement capable of meeting the stringent demands of a telecommunications system.

According to the present invention there is provided a clock signal security arrangement comprising inputs for at least three corresponding clock signals, averaging means arranged to provide a comparison clock signal derived from all of the clock input signals, and comparison means arranged to compare each input clock signal with said comparison clock signal, said comparison means providing an output signal in dependance upon the validity of each of said clock input signals.

Preferably said arrangement also comprises delay means arranged to provide a delayed clock signal derived from said comparison clock signal, and said comparison means is enabled when both said delayed clock signal and said comparison clock signal are at the same value the delay being selected such that comparison of the input clock signals with the comparison clock signal occurs substantially mid-way through a pulse period of the comparison clock signal.

In one embodiment of the arrangement the comparison clock signal is selected for output as a controlling clock signal.

In a preferred embodiment of the arrangement one of the input clock signals is selected for output as a controlling clock signal in dependance upon the output of the comparison means.

In the preferred embodiment an input clock signal present on a first input is selected for output as the controlling clock signal unless said clock signal is determined as faulty by the comparison means. If the clock signal present on said first input is determined as faulty by said comparison means the clock signal on a second input is selected for output as the controlling clock signal.

The selection of the controlling signal may be by a circuit comprising a first logic gate which receives the first clock input signal, and a second logic gate which receives the second clock input signal, said first logic gate outputting either the first clock input signal or an enable signal to said second logic gate in dependance upon the output of the comparison means, said second logic gate passing either the first clock signal or the second clock signal.

The comparison means may be arranged to output a signal to control means indicating the presence of a fault in one of the input clock signals to provide an interrupt signal to such control means. A data signal indicating which of the input clock signals is faulty may be output in parallel with said interrupt signal.

Clock signal selection and security arrangements in accordance with the invention will now be described by way of example only with reference to the accompanying drawings which when assembled as shown is a circuit diagram of the arrangement.

Referring to the drawings the system accepts three levels of each of two clocks from a telecommunications exchange clock generation system (not shown). The first clock at 2048 kilohertz is received on inputs 1,2 and 3 whilst the second clock, an eight kilohertz time-division-multiplex - (TDM) frame synchronisation signal is received on inputs 41,42 and 43.

Since the two clocks are handled in a slightly different manner the circuit functions will be considered separately. Thus commencing with the clock inputs 1,2 and 3 the clock signals are fed to differential line receivers 4,5 and 6 and are distributed through the circuit by respective connections 7,8 and 9.

An adder circuit 10 performs a two out of three majority decision on the three clock levels which majority decision is distributed by a connection 11 to various fault detection elements of the circuit. However, the majority decision clock is not used as the master clock signal to be supplied since if a fault is present an uneven mark/space ratio may be generated if skew due to differential input delays is present in one or both of the two majority clocks. The majority decision clock is used as a comparison signal in the fault detection circuitry which comprises three comparison gates 17,18,19 whence the clock signals on connections 7,8 and 9 are respectively fed by way of respective bistable elements in a circuit 12 via respective connections on leads 14,15,16. The majority clock on lead 11 is fed by way of a respective bistable element in the circuit 12 on a connection 13 to the other inputs of each of the comparison gates 17,18,19.

Considering the output of the comparator 17 on connection 20, assuming that the clock at the input 1 is satisfactory then the clock signal feeds through a gate 23 and a gate 24 to provide the master clock output signal on a lead 25. However, if the first clock is faulty then gate 23 is disabled.

Similarly the signal from the first clock comparison gate 17 is inverted by a NOR gate 28' to provide an enable signal via connection 27 to enable a gate 25 which is also enabled by the signal on the connection 21 from the gate 18 if the second clock signal from the input 2 is satisfactory. Thus the clock signal on connection 8 is enabled through the gate 25 and the gate 24 to provide the master clock on the lead 26.

It will be appreciated that when the clock signal on the input 1 is satisfactory, the output signal from the gate 28' via the connection 27 disables the gate 25 to prevent the passage of the clock signal received on the input 2 to the output lead 26. It may be seen therefore that if the clock on the input 1 is satisfactory it acts as the master clock regardless of the condition of the clock on the input 2. However, if the clock on the input 1 is determined as faulty, the clock on the input 2 acts as the master clock. The clock provided on the input 3 serves only as an arbiter for the majority decision logic and is not selected for output.

If any of the three clocks on the inputs 1,2 or 3 is determined as faulty, it is necessary for an alarm condition to be generated. This is achieved by combining the three clock condition signals from the gates 17, 18 and 19 in a gate 28 which outputs a signal on connection 29 if any fault output is present. This signal passes by way of a bistable circuit in a logic circuit 30 to a NAND gate 31 which, if either input changes, forwards an interrupt signal on a lead 32 to the exchange control system (not shown) indicating a clock failure.

Simultaneously an indication of the presence of a clock fault is output through a multiplexer contained in a circuit 33 together with an indication of which clock is at fault output through three other multiplexers either in the circuit 33 or in a circuit 34 to data leads 35-38. The function of the other multiplexer inputs will become apparent from the description which follows relating to the second group of clocks.

It will be noted that clocking of the bistable circuit 12 to effect comparison of the clocks is derived from the average clock on connection 11 from the adder 10 by way of a delay circuit 39 and a gate 40. The delay is selected to be approximately 120 nano seconds incorporated in a commercially available selectable delay circuit. This ensures that comparison of the clock signals occurs after the input clock transitions.

The three levels of frame synchronisation clock are received on inputs 41,42 and 43 and pass via receivers 44,45 and 46 and connections 47,48 and 49 to the adder circuit 10. In this case the output of the adder circuit 10, a two out of three majority signal is fed directly to output 50 for use as the system frame synchronisation signal.

This average clock on connection 50 together with the three clock signals received now passes by way of a respective bistable circuit 52 and connection 53 to three comparison gates 57,58,59 which, in the same manner as the gates 17,18,19 determines whether any of the three clock signals are faulty. If one of the clocks is determined as faulty a NOR gate 60 connected to a respective bistable element in the circuit 30 causes the output of an interrupt signal by way of NAND gate 31 and lead 32 in the same manner as the main clock signal.

Similarly a clock fault indication is provided through the first four to one multiplexer circuit in element 33 to the data output 35 with an indication of the faulty clock through respective multiplexers of elements 33 and 34 to data outputs 36,37 and 38.

It will be noted that the bistable circuit 52 is clocked from the two megahertz main clock signal. It will also be noted that the unconnected inputs of the multiplexers of elements 33 and 34 are available for other fault reporting circuits such as pcm speech paths (not shown).

A reset signal may be applied to lead 61 connected to the bistable elements 12,52 to clear any fault indications occurring on (eg.) intialisation of a connected system.

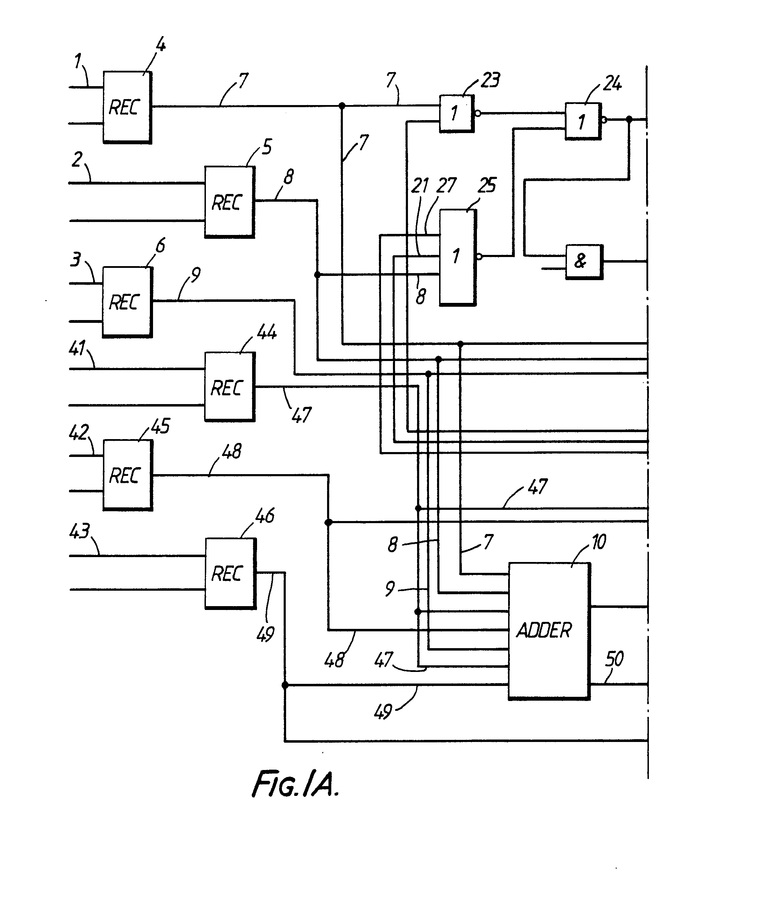

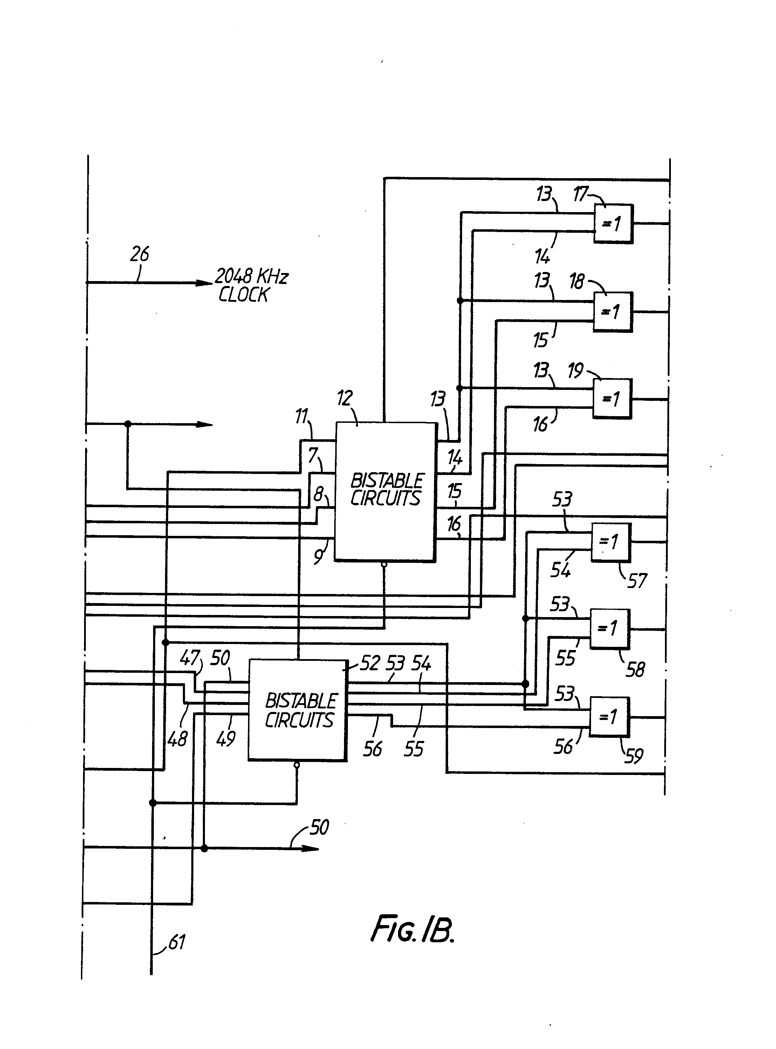

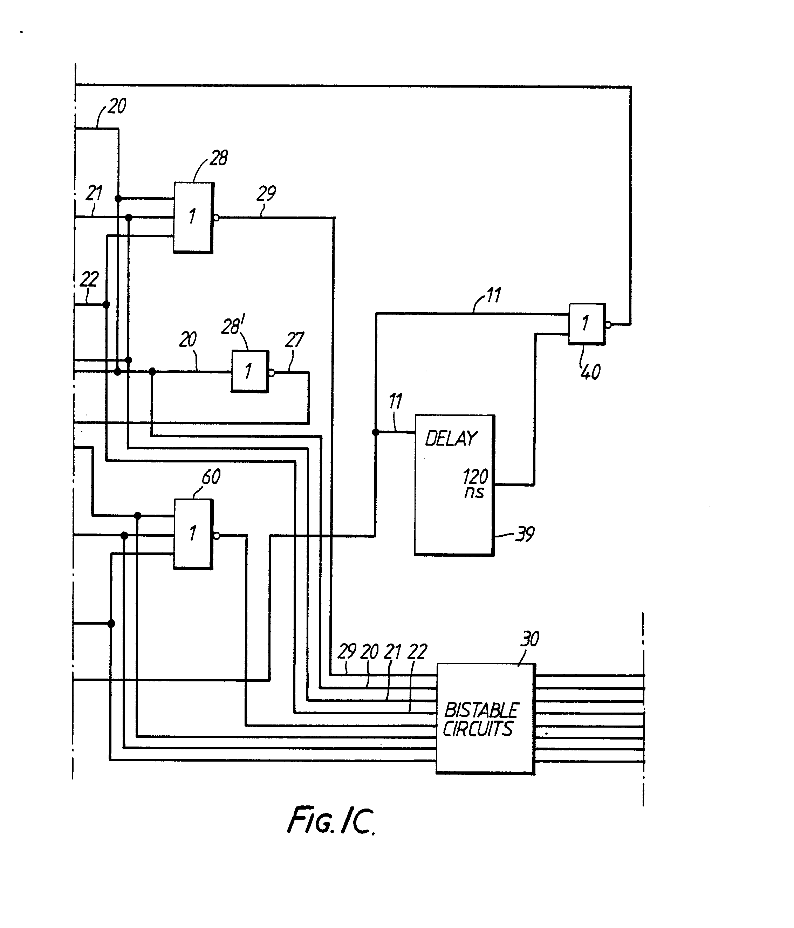

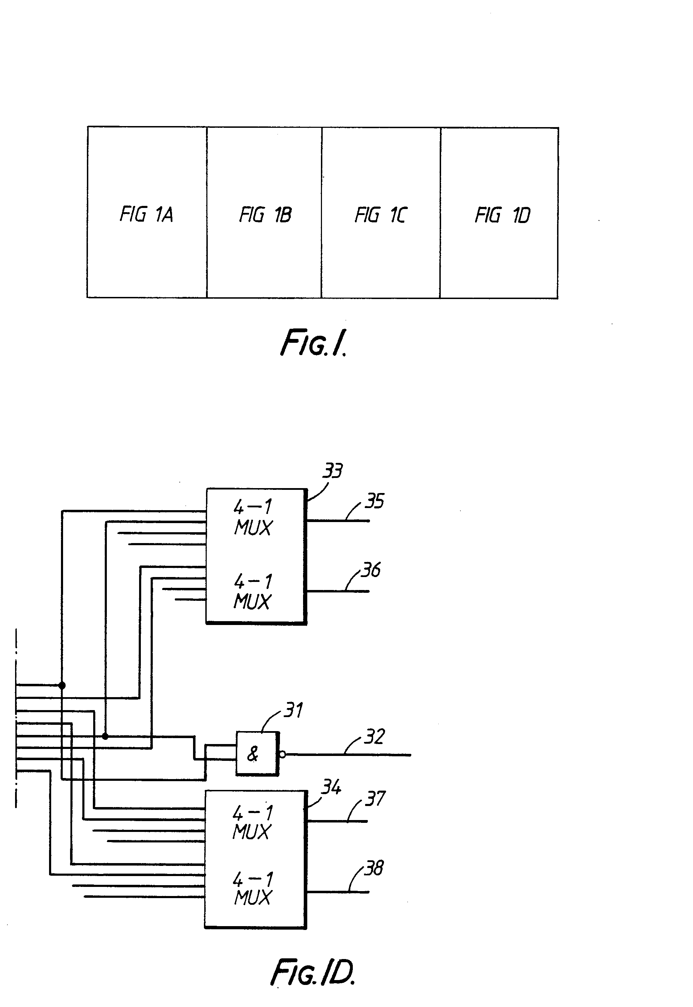

For the avoidance of doubt the following commercially available integrated circuits may be used to construct the circuit shown in the drawings:-

Receivers 4,5 and 6 and 44,45 and 46:

Fig.1A.

FIG. 1B.

*Fig. IC.*

Fig. 1.

Fig. 1D.